# EUROPEAN PATENT SPECIFICATION

(11) **EP 1 146 754 B1**
(45) Date of publication and mention of the grant of the patent: **15.08.2007**
(21) Application number: 00440106.3
(22) Date of filing: 14.04.2000
(51) Int. Cl.: H04Q 7/22

(54) **A method for transmitting the location of communications subscribers, a communications network, a service computer and program modules therefor**
Verfahren zur Übertragung der Lokalisierung der Kommunikationsteilnehmern, ein Kommunikationsnetzwerk, ein Dienstkomputer und Programmodule dafür
Méthode pour transmettre les locations des abonnés de communication, un réseau de communication, calculateur de service et modules de programme

(43) Date of publication of application: 17.10.2001
(73) Proprietor: Alcatel Lucent, 75008 Paris (FR)
(72) Inventor: Ferrari, Gianfranco, 70435 Stuttgart (DE)
(74) Representative: Brose, Gerhard

(56) References cited:
- EP-A- 0 869 688
- WO-A-99/27725
- US-A- 5 689 809

## Description

The invention relates to a method for transmitting the location of communications subscribers according to the preamble of Claim 1, a communications network according to the preamble of Claim 7, a service computer according to the preamble of Claim 8 and program modules to be executed in the service computer.

In addition to the transport of user information, modern communications networks offer their subscribers an increasing number of services often associated with additional convenience and information. One of these services is the calling line identification presentation (CLIP) service specified in the ITU-T Standard Q.951. In this service, in the course of the connection establishment the telephone number of the calling subscriber is transmitted to the terminal of the called subscriber where it can be displayed, for example by means of a LCD display. The called subscriber can identify the calling subscriber on the basis of the telephone number and then decide whether to accept the call. In modern terminals, this identification can also take place automatically if the telephone number is known in the terminal and an association with a subscriber is programmed. This service, originally defined for ISDN (Integrated Services Digital Network), is also available for GSM subscribers and, since very recently, even for analogue network subscribers. For reasons of data protection, the telephone number transmission must be able to be disabled by the subscriber whose telephone number is to be transmitted. The above mentioned standard also specifies a service for displaying the telephone number of the called subscriber, the connected line presentation (COLP) service. As in the case of the CLIP service, the subscribers have the option of disabling this service. However, this service (COLP) is not implemented by many telecommunications providers in consideration of the fact that the telephone number of the called subscriber is known to the calling subscriber.

Continuous location determination takes place of subscribers to a cellular mobile radio network, for example the GSM network. As soon as a subscriber leaves one so-called geographical area of the network and enters a new geographical area, this subscriber and the new geographical area are noted in a so-called Visitors Location Register (VLR); when the subscriber is called he can then be purposively rung in a geographic area. Furthermore, methods are known in which it is possible to effect a substantially more accurate location, which goes beyond the location of a geographical area, for example with the aid of radio signal measurements. Here, radio signals of transmitters of different cells are weighted in the mobile terminal. The distances to these transmitters are derived from the weightings of these radio signals. With knowledge of the geographic positions of the transmitters, an extremely accurate location determination can then be effected using trigonometric procedures. This information can then be transmitted to specific GSM subscribers in the form of a short message by GSM-specific services, for example via the so-called short message service (SMS).

The above described location transmission service is provided only for GSM subscribers. Moreover, this information must be requested via a special service, for example the above mentioned short message service. As a result of new services offered by telecommunications providers, for example number portability in which the subscriber retains his telephone number even after a change of residence, or the setting up of a personal telephone number whereby a subscriber can be reached on one single number at different, definable locations of the communications network, even in fixed networks a subscriber's telephone number is clearly becoming a less expressive kind of information about its owner. With this background, and in view of the increasing amalgamation of mobile phone networks and fixed networks, it is desirable to provide a broad basis for the generation of location information and to make this information accessible to all subscribers through a convenient service, similar for example to the above described telephone number display service. In the future, presentation of the location as well as the name of the communication partner could supplement or replace the presentation of the telephone number.

US patent 5, 950, 137 discloses a discribes a method for use in a mobile communication system which provides a requesting mobile station (MS) with location information of a target mobile station (MS). For this purpose the requesting MS send a message containing the subscriber number of the target MS a service code representing the location information service and a secret number known from the target MS. If the secret number contained in the message corresponds to the secret number of the target MS the location information is retrieved from a mobile subscriber information register and displayed to the requesting MS.

The object of the invention is to provide a convenient and flexible method, and suitable means, for the provision of location information and the transmission thereof to the subscribers.

In accordance with the invention, this object is achieved by a method according the teaching of Claim 1, a communications network according to the teaching of Claim 7, a service computer according to the teaching of Claim 8, and program modules according to the teachings of Claims 11 and 13.

Further advantageous developments of the invention are disclosed in the dependent claims and in the following description.

In the following the invention will be explained further with reference to the drawings in which:
- Fig.1: schematically illustrates a first example of a method according to the invention for transmitting location information from a service computer according to the invention to subscribers in a communications network according to the invention,
- Fig.2: schematically illustrates another example of a method according to the invention for transmitting location information from a service computer according to the invention to subscribers in a communications network according to the invention and
- Fig.3: is a block circuit diagram illustrating an example of the functional construction of a service computer according to the invention for the storage, management and forwarding of location information.

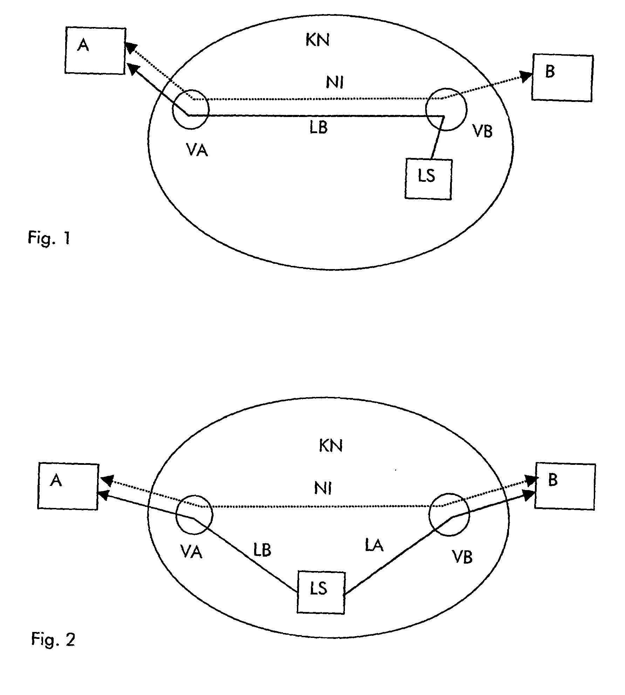

Fig.1 illustrates a communications network KN in which two exchanges VA and VB are shown by way of example. Two subscribers A and B are shown outside the communications network KN. A broken-line double arrow N1 extending between the subscriber A and the subscriber B via the exchanges VA and VB symbolises a communication relationship between the subscribers A and B. A service computer LS has also been shown in the communications network KN. From this service computer LS, a solid-line arrow LB extends via the exchange VB and the exchange VA to the subscriber A. This arrow LB represents the path of the information on the location of the subscriber B.

The communications network KN can be an exclusive mobile phone network (e.g. GSM), an exclusive fixed network or an integrated mobile/fixed network.

Here and in the following the information on the location of a subscriber is not to be understood exclusively as the actual whereabouts of this subscriber; this information can also comprise for example the location of the local exchange to which the subscriber is connected, or can consist of information requested by the subscriber to be passed on to other subscribers. Furthermore the location initially is not associated with a fixed mode of description, for example geographic (latitude and longitude) or political (e.g. state and town).

An example of a service for displaying the location of a called subscriber B to the calling subscriber A will be described in the following. This service corresponds to the connected line presentation (COLP) service described in the above mentioned standard Q.951. A service computer LS, which has stored the location of the subscriber B, is connected to the exchange VB.

The storage of this information takes place in the course of the setting up of the service for the subscriber B for displaying his location. Thus for example on the basis of the subscriber B's telephone number, the location is determined automatically from an electronically stored telephone directory; in the further course of the setting up of the service, the subscriber then confirms the determined location or gives an alternative location. In a preferred variant of the service to be described in the following, the subscriber additionally indicates the subscribers to whom his location is to be displayed, for example by giving their telephone numbers.

If the subscriber A now calls the subscriber B, a call signalling procedure takes place from the subscriber A via the exchange VA to the exchange VB. The exchange VB now sends the telephone number both of the calling subscriber A and of the called subscriber B to the service computer LS. The service computer LS firstly checks whether the subscriber B has set up a location display service. In the case of a positive check result, it further checks whether the calling subscriber A is among the subscribers specified by the subscriber B to whom the location is to be communicated. If both check results are positive, the service computer LS sends the location information LB to the exchange VB, by which it is transmitted via the exchange VA to the subscriber A in the further course of the call signalling procedure. If one of these checks has a negative result, the service computer transmits the information that no location is to be displayed.

Advantageously, the exchange VA comprises a speech generator to convert the location information LB to speech and sending the location information as a speech message on the communication channel to the subscriber A. In this case, no modifications on the subscriber terminals are necessary. If for the described service, both, speech location message service and signalling location message service to display optically the location information are available, the subscriber A may choose the service when subscribing and, for the case that no choice was made, a default service (e.g. voice message service) may be foreseen.

Similarly to the above described service, it is possible to implement a service for displaying the location of a calling subscriber B to a called subscriber A. This service corresponds to the calling line identification presentation (CLIP) service described in the above mentioned standard Q.951. Here the signalling commences from the subscriber B to the exchange VB. As in the above example, the exchange VB sends the telephone numbers of the two subscribers A and B to the service computer LS. The service computer performs the same checks as described in the last paragraph. In the case of positive check results, the service computer LS sends the location information LB to the exchange VB, by which it is transmitted via the exchange VA to the called subscriber A in the course of a further signalling procedure.

The simple example, shown in Fig.1, comprising the assignment of a service computer LS to an exchange VB, must be extended in the event of the full implementation of the above described services. For reasons of symmetry, the exchange VA then must also be assigned a corresponding service computer LS, or both exchanges VA and VB must be provided with direct access to a service computer LS.

Since, as described in the foregoing, the subscribers are not always to be assigned to a fixed exchange, or can change their location and thus their exchange while retaining their telephone numbers, in a larger communications network KN a system in which the locations of the subscribers are stored de-centrally in different service computers LS would rapidly lead to handling limits of the above described services. Therefore Fig.2 shows an example of a communications network in which a central service computer LS is directly connected to all the exchanges. Here the service computer LS can consist of a combination of a plurality of computers or its functions can be integrated in one or more other computers connected to the communications network.

Fig.2 illustrates the communications network KN, the exchanges VA and VB, and the subscribers A and B connected to the exchanges VA and VB, and includes the double arrow N1 shown in Fig.1 symbolising the communications link between the subscribers A and B. Also as in Fig.1, a service computer LS has been entered in the communications network. From this service computer LS, an arrow LA extends via the exchange VB to the subscriber B and an arrow LB via the exchange VA to the subscriber A. Here the arrow LA represents the path of the information on the location of the subscriber A and the arrow LB the path of the information on the location of the subscriber B.

In the following example, the location of the communication partner is to be displayed to each of the two subscribers A and B. The exchange VA of the calling subscriber A transmits the subscriber numbers of the two communications partners to the service computer LS. As described with reference to Fig.1, the service computer then checks whether the location of the subscriber B is to be displayed to the subscriber A. In the case of a positive check result, the location of the subscriber B is transmitted via the exchange VA to the subscriber A. Independently thereof, the exchange VB also sends both subscriber numbers to the service computer. Similarly as in the previous case, the service computer now checks whether the location of the subscriber A is to be displayed to the subscriber B. In the case of a positive check result, the location of the subscriber A is transmitted via the exchange VB to the subscriber B.

A problem not yet discussed relates to the format of the location display. In a simple implementation the location information and the format can be defined by the subscribers themselves. In another implementation, a standardised output format comprising for example three fields is provided, with one field for the state, one field for the town and one field for the district of the town. The representation in these fields can then be generated automatically for example from the subscriber's address.

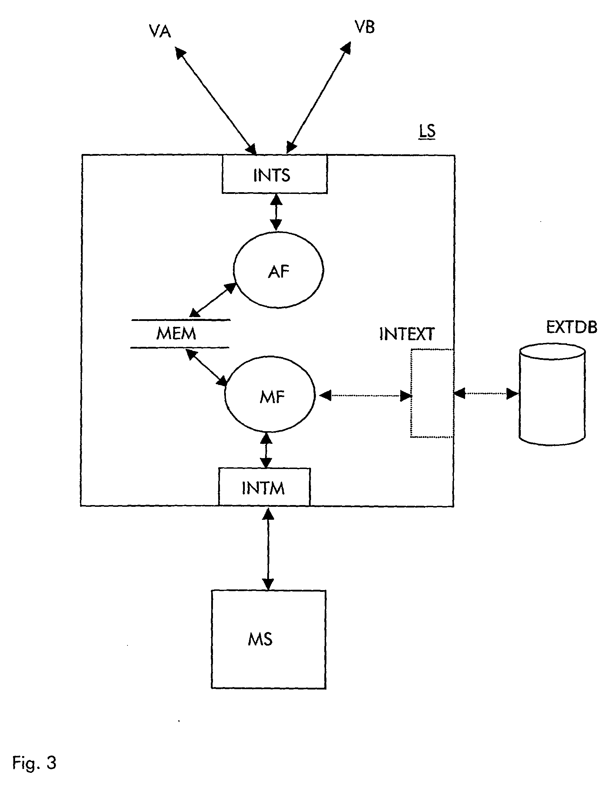

An example of the construction of a service computer LS is to be described with reference to a block circuit diagram shown in Fig.3. The representation as compact computer is to be understood only as an example; as described in the foregoing, the functions described here can be distributed between different computers or integrated in existing computers. Fig.3 illustrates the service computer LS shown in Fig.1 and Fig.2. Shown in the service computer LS are an interface INTS to the exchanges VA and VB which have likewise been illustrated in Fig.1 and Fig.2, an optional interface INTEXT, represented by broken lines, to a device EXTDB containing current location data, and an interface INTM to an input computer MS. A memory MEM, an interrogation function AF and a management function MF have also been shown in the service computer. Double arrows in each case extend between the management function MF and the interfaces INTEXT, INTM and the memory MEM. Double arrows have also in each case been entered between the interrogation function AF and the interface INTS and between the memory MEM and the interrogation function AF. The double arrows symbolise the flow of information in both directions. The service computer LS can be imagined to consist of two parts. The upper part with the interrogation function AF and the interface INTS constitutes the real time part of the service computer LS. The lower part comprising the management function MF, the interface INTM and the interface INTEXT constitutes the management part of the service computer LS which does not necessarily run in real time. The memory MEM represents the link between these two parts. Examples of program flows for the interrogation function AF and the management function MF are in each case described in the following:

Via the interface INTS, from an exchange VA the interrogation function AF receives the telephone number of a subscriber A whose location is to be displayed and the telephone number of a further subscriber B to whom this location is to be transmitted. For each subscriber who has set up the service for displaying his location, the memory MEM contains an entry of the telephone number and the location of said subscriber and a list of telephone numbers of further subscribers to whom the location is permitted to be displayed. By interrogation of the memory MEM it is firstly checked whether subscriber A is entered in the memory. By further interrogation it is checked whether the further subscriber B is authorised to receive the location information. If both check results are positive, the location information is communicated to the exchange A. Alternatively if the exchange VB, to which the receiver B of the location information is connected, is known in the service computer LS or has been made known by the exchange VA, it can also be provided that this information is transmitted directly to the exchange VB to which the subscriber B is connected.

The management function MF is responsible for updating the above mentioned memory MEM. For this purpose, via the interface INTM it receives data of an input computer MS. This input computer MS can be a computer of an operator who is called by the subscriber A to set up the above described service or to input new data and who then manually inputs the corresponding data into this input computer MS. These data can consist directly of the telephone numbers of the above described subscribers, or data with which these subscribers can be identified, for the example the name and location of a subscriber, and which is then converted into telephone numbers in the management function MF.

The input computer MS can also consist of a computer with a voice-recognition capability which forwards the voice inputs of the subscriber A automatically to the interface INTM. The setting up and maintenance of the location display service can also conveniently take place via the internet, in which case the input computer MS can consist of a computer which is connected to the internet and to which the subscriber A sends the corresponding data via the internet.

Alternatively to the above described method in which a subscriber A actively sets up a service to display his location, it can also be provided that the location of each subscriber is basically stored in the memory MEM without the subscriber setting up a service for this purpose. The subscriber can then disable or enable the display, for example similarly as in the case of the above described calling line identification presentation (CLIP) procedure. The location can then be forwarded for example to subscribers who set up a service for the reception of location information.

As an alternative to a list of authorised subscribers, it can be provided that different subscribers be assigned different authorisation levels, for example different authorisations for specific, above mentioned information fields. Thus for example only the state and town can be communicated to one subscriber, while the town district is additionally communicated to another subscriber. It is also possible for different locations to be sent to the subscribers, if for example the caller has a personal telephone number under which he can be reached at different locations at different times. In this case, for example, there can be a larger circle of subscribers to whom the business location is communicated and a smaller circle of subscribers to whom the private location is communicated. It is additionally possible to specify times of day or dates when the location is or is not to be transmitted.

In an advantageous further development of the invention, the service computer LS is connected to an external device EXTDB which keeps available current location data on subscribers, for example from a mobile telephone network. Such a device can consist of the above mentioned Visitors Location Register (VLR) of the GSM network, or a special device which keeps accurate location data on mobile telephone subscribers. In this case the service computer LS can for example cyclically request new location data from these devices and overwrite the previous location data in the memory MEM with these data. These data may firstly have to be converted to a legible or above described standardised format. This conversion can additionally take place in the management function MF.

## Claims

1. A method for transmitting a location information of a first subscriber (A) to a further subscriber (B), both connected to a communications network (KN) having access to information on the location of said first subscriber (A),
whereby after a first
- check at a service computer (LS) if said first subscriber (A), has set up a location display service; the method further comprises the steps of:
- second checking at said service computer (LS) if said further subscriber (B) belongs to a list of authorised subscribers stored by said first subscriber (A) at said service computer (LS);
- transmitting a location information of said first subscriber (A) to said further subscriber (B) in the course of the connection establishment between the first and further subscribers (A, B) if said second check results are positive.

2. A method according to Claim 1, **characterised in that** the location information to be transmitted is determined from static location data and from data, related to said further authorised subscribers (B) who are destined to receive the location information.

3. A method according to Claim 1, **characterised in that** the service computer (LS) receives current location data from an external device (EXTDB), especially from a GSM Visitors Location Register VLR, and the location information to be transmitted is determined from this data and from data about said further authorised subscribers (B) who are to obtain the location information.

4. A method according to Claim 2 or 3, **characterised in that** the location information to be transmitted has different contents for different further authorised subscribers (B).

5. A method according to Claim 1, **characterised in that** the location information is transmitted as a voice message.

6. A method according to Claim 1, **characterised in that** said first subscriber (A) who wishes to learn the location of said further subscriber (B) calls the service computer (LS) or a unit connected to the service computer (LS), and the location of said further subscriber (B) is then transmitted to said first subscriber (A).

7. A communications network (KN) comprising a service computer (LS) to retrieve location information on subscribers (A, B), said service computer (LS) comprising means for first checking if a first subscriber (A) has set up a location display service, **characterised in that** it further comprises
- second checking means to check whether a further subscriber (B) belongs to a list of subscribers authorised to be transmitted a location information of said first subscriber (A), said list being stored by said first subscriber (A) at said service computer (LS); and
- signalling means (LA) for transmitting the location information to said further subscriber (B) in the course of the connection establishment between said first and further subscribers (A, B) if said second check results are positive.

8. A service computer (LS) comprising storage means (MEM) for storing location information on a first subscriber (A) or retrieving means to retrieve location information on said first subscriber (A) from an external source (EXTDB), said service computer (LS) comprising means for first checking if a first subscriber (A) has set up a location display service, **characterised in that** the following means are provided:
• storage means (MEM) to store a list of one or more further subscribers (B), that are allowed to receive a location information of said first subscriber (A),
• interrogation means (AF) for retrieving the location information on said first subscriber (A) to be displayed to said further subscriber (B),
- second checking means to check whether a further subscriber (B) belongs to a list of subscribers authorised to be transmitted a location information of said first subscriber (A), and
- signalling means LA for transmitting the location information to said further subscriber (B) in the course of the connection establishment between said first and further subscribers (A, B) if said second check results are positive .

9. A service computer (LS) according to Claim 8, **characterised in that** checking means are additionally provided for checking the authorisation of a subscriber (A, B) to receive location information.

10. A service computer (LS) according to Claim 8, **characterised in that** additional management means (MF) are provided for keeping the location data up-to-date and updating the subscriber authorisations.

11. A program module (AF) comprising code means adapted to perform the following steps of a method for transmitting a location information of a first subscriber (A) to a further subscriber (B) said program module being adapted to be executed in a service computer (LS)
• reception of the telephone number of said first subscriber (A), whose location information is to be transmitted,
• reception of the telephone number of said further subscriber (B), to whom the location information is to be transmitted and
first checking at a service computer (LS) if said first subscriber (A) has set up a location display service; second checking at said service computer (LS) if said further subscribers (B) belongs to a list of authorised subscribers stored by said first subscriber (A) at said service computer (LS);
transmitting a location information of said first subscriber (A) to said further subscriber (B) in the course of the connection establishment between the first and further subscribers (A, B) if said second check results are positive.

12. A program module (MF) according to claim 11, which is executed in a service computer (LS) for setting up and managing a service for transmitting a location information, further comprising the following steps :
• reception of the telephone numbers of the further subscribers (B) who are authorised to receive the location information on the first subscriber (A),
• storage, in a memory (MEM), of the telephone numbers of the further subscribers authorised to receive the location information and
• storage of the location information or the source to retrieve the location information (EXTDB) on first subscriber (A) which is to be transmitted.

13. A program module (MF) according to Claim 12, **characterised in that** receiving means (INTEXT) are provided for the automatic reception of current location information of an external device (EXTDB).

## Patentansprüche

1. Verfahren zur Übertragung einer Standortinformation zu einem ersten Teilnehmer (A) an einen weiteren Teilnehmer (B), die beide mit einem Kommunikationsnetzwerk (KN) verbunden sind, das Zugriff auf Informationen zum Standort dieses ersten Teilnehmers (A) hat, wobei nach einer ersten
* Prüfung an einem Dienstcomputer (LS), ob dieser erste Teilnehmer (A) einen Dienst zur Standortanzeige eingerichtet hat, das Verfahren des Weiteren die folgenden Schritte umfasst:
* eine zweite Prüfung an diesem Dienstcomputer (LS), ob dieser weitere Teilnehmer (B) zu einer Liste autorisierter Teilnehmer gehört, die vom ersten Teilnehmer (A) an diesem Dienstcomputer (LS) gespeichert wurde;
* Übertragung der Standortinformationen zu diesem ersten Teilnehmer (A) an diesen weiteren Teilnehmer (B) im Rahmen des Verbindungsaufbaus zwischen dem ersten und weiteren Teilnehmern (A, B), wenn die Ergebnisse dieser zweiten Prüfung positiv sind.

2. Verfahren gemäß Anspruch 1, **dadurch gekennzeichnet, dass** die zu übertragenden Standortinformationen aus statischen Standortdaten ermittelt werden und aus Daten zu diesen weiteren berechtigten Teilnehmern (B), die die Standortinformationen erhalten sollen.

3. Verfahren gemäß Anspruch 1, **dadurch gekennzeichnet, dass** der Dienstcomputer (LS) aktuelle Standortdaten von einer externen Quelle (EXTDB) empfängt, insbesondere von einem GSM-Besucherstandortregister VLR, und dass die zu übertragenden Standortinformationen aus diesen Daten ermittelt werden und aus Daten zu diesen weiteren berechtigten Teilnehmern (B), die die Standortinformationen erhalten sollen.

4. Verfahren gemäß Anspruch 2 oder 3, **dadurch gekennzeichnet, dass** die zu übertragenden Standortinformationen für verschiedene berechtigte Teilnehmer (B) unterschiedliche Inhalte haben.

5. Verfahren gemäß Anspruch 1, **dadurch gekennzeichnet, dass** die Standortinformationen als Sprachnachricht übertragen werden.

6. Verfahren gemäß Anspruch 1, **dadurch gekennzeichnet, dass** der erste Teilnehmer (A), der den Standort dieses weiteren Teilnehmers (B) erfahren möchte, den Dienstcomputer (LS) oder eine mit dem Dienstcomputer (LS) verbundene Einheit abfragt und der Standort dieses weiteren Teilnehmers (B) anschließend an diesen ersten Teilnehmer (A) übertragen wird.

7. Ein Kommunikationsnetzwerk (KN), das einen Dienstcomputer (LS) zum Abrufen von Standortinformationen zu Teilnehmern (A, B) umfasst, wobei dieser Dienstcomputer (LS) Mittel umfasst erstens zur Prüfung, ob ein erster Teilnehmer (A) einen Dienst zur Standortanzeige eingerichtet hat, **dadurch gekennzeichnet, dass** er des Weiteren Folgendes umfasst:
- zweitens Prüfmittel zur Prüfung, ob ein weiterer Teilnehmer (B) einer Liste von Teilnehmern angehört, an die die Standortinformationen zu diesem ersten Teilnehmer (A) übertragen werden dürfen, wobei diese Liste von diesem ersten Teilnehmer (A) auf diesem Dienstcomputer (LS) gespeichert wird, und Signalverarbeitungsmittel (LA) zum Übertragen der Standortinformationen an diesen weiteren Teilnehmer (B) im Verlauf des Verbindungsaufbaus zwischen diesem ersten und weiteren Teilnehmern (A, B), sofern die Ergebnisse dieser zweiten Prüfung positiv sind.

8. Dienstcomputer (LS) mit Speichermitteln (MEM) zum Speichern von Standortinformationen zu einem ersten Teilnehmer (A) oder Abrufmitteln zum Abrufen von Standortinformationen zu diesem ersten Teilnehmer (A) von einer externen Quelle (EXTDB), wobei dieser Dienstcomputer (LS) Mittel umfasst für eine erste Prüfung, ob ein erster Teilnehmer einen Dienst zur Standortanzeige eingerichtet hat, **dadurch gekennzeichnet, dass** die folgenden Mittel bereitgestellt werden:
* Speichermittel (MM) zum Speichern einer Liste von einem oder mehreren Teilnehmern (B), die zum Empfang von Standortinformationen zu diesem ersten Teilnehmer (A) berechtigt sind,
* Abfragemittel (AF) zum Abfragen der Standortinformationen zu diesem ersten Teilnehmer (A), die diesem weiteren Teilnehmer (B) angezeigt werden sollen,
* Prüfmittel für eine zweite Prüfung, ob ein weiterer Teilnehmer (B) einer Liste von Teilnehmern angehört, an die die Standortinformationen zu diesem ersten Teilnehmer (A) übertragen werden dürfen, und
* Signalmittel (LA) zur Übertragung der Standortinformationen an diesen weiteren Teilnehmer (B) im Rahmen des Verbindungsaufbaus zwischen diesem ersten und weiteren Teilnehmern (A, B), wenn die Ergebnisse dieser zweiten Prüfung positiv sind.

9. Dienstcomputer (LS) gemäß Anspruch 8, **dadurch gekennzeichnet, dass** zusätzlich Prüfmittel bereitgestellt werden zur Prüfung, ob ein Teilnehmer (A, B) zum Empfang der Standortinformationen berechtigt ist.

10. Dienstcomputer (LS) gemäß Anspruch 8, **dadurch gekennzeichnet, dass** zusätzlich Managementmittel (MF) bereitgestellt werden, um die Standortdaten auf dem neuesten Stand zu halten und die Berechtigungen der Teilnehmer zu aktualisieren.

11. Programmmodul (AF) mit Codemitteln, angepasst zur Durchführung der folgenden Schritte eines Verfahrens zur Übertragung von Standortinformationen zu einem ersten Teilnehmer (A) an einen weiteren Teilnehmer (B), wobei dieses Programmmodul zur Ausführung der folgenden Schritte auf einem Dienstcomputer (LS) angepasst ist:
* Empfang der Telefonnummer dieses ersten Teilnehmers (A), dessen Standortinformationen übertragen werden sollen,
* Empfang der Telefonnummer dieses weiteren Teilnehmers (A), an den die Standortinformationen übertragen werden sollen, und
* erste Prüfung an einem Dienstcomputer (LS), ob dieser erste Teilnehmer (A) einen Dienst zur Standortanzeige eingerichtet hat;
* zweite Prüfung an diesem Dienstcomputer (LS), ob dieser weitere Teilnehmer (B) zu einer Liste autorisierter Teilnehmer gehört, die vom ersten Teilnehmer (A) an diesem Dienstcomputer (LS) gespeichert werden;
* Übertragung der Standortinformationen zu diesem ersten Teilnehmer (A) an diesen weiteren Teilnehmer (B) im Rahmen des Verbindungsaufbaus zwischen dem ersten und weiteren Teilnehmern (A, B), wenn die Ergebnisse dieser zweiten Prüfung positiv sind.

12. Programmmodul (MF) gemäß Anspruch 11, das in einem Dienstcomputer (LS) ausgeführt wird zum Einrichten und Verwalten eines Dienstes zur Übertragung der Standortinformationen, das des Weiteren die folgenden Schritte umfasst:
* Empfang der Telefonnummern der weiteren Teilnehmer (B), die zum Empfang von Standortinformationen zu dem ersten Teilnehmer (A) berechtigt sind,
* Speichern der Telefonnummern der weiteren Teilnehmer, die zum Empfang der Standortinformationen berechtigt sind, in einem Speicher (MEM), und
* Speichern der Standortinformationen oder der Quelle zum Abrufen der zu übertragenden Standortinformationen (EXTDB) zum ersten Teilnehmer (A).

13. Programmmodul (NF) gemäß Anspruch 12, **dadurch gekennzeichnet, dass** Empfangsmittel (INTEXT) bereitgestellt werden zum automatischen Empfang der aktuellen Standortinformationen zu einer externen Anordnung (EXTDB).

## Revendications

1. Procédé pour transmettre une information d'emplacement d'un premier abonné (A) à un autre abonné (B), tous deux connectés à un réseau de communication (KN) ayant accès à l'information sur l'emplacement dudit premier abonné (A), par lequel, après un premier contrôle au niveau d'un ordinateur de service (LS), si ledit premier abonné (A) a configuré un service d'affichage de l'emplacement, le procédé comprend en plus les étapes suivantes :
- Deuxième contrôle au niveau dudit ordinateur de service (LS) pour vérifier si ledit autre abonné (B) fait partie d'une liste des abonnés autorisés stockée par ledit premier abonné (A) sur ledit ordinateur de service (LS) ;
- Transmission d'une information d'emplacement dudit premier abonné (A) audit autre abonné (B) au cours de l'établissement de la connexion entre le premier et l'autre abonnés (A, B) si les résultats dudit deuxième contrôle sont positifs.

2. Procédé selon la revendication 1, **caractérisé en ce que** l'information d'emplacement à transmettre est déterminée à partir des données d'emplacement statiques et à partir des données en rapport avec lesdits autres abonnés autorisés (B) qui sont destinés à recevoir l'information d'emplacement.

3. Procédé selon la revendication 1, **caractérisé en ce que** l'ordinateur de service (LS) reçoit les données d'emplacement actuelles de la part d'un dispositif externe (EXTDB), notamment de la part d'un registre d'emplacement des visiteurs VLR, et l'information d'emplacement à transmettre est déterminée à partir de ces données et à partir des données relatives aux dits autres abonnés autorisés (B) qui doivent obtenir l'information d'emplacement.

4. Procédé selon la revendication 2 ou 3, **caractérisé en ce que** l'information d'emplacement à transmettre possède des contenus différents pour d'autres abonnés autorisés (B) différents.

5. Procédé selon la revendication 1, **caractérisé en ce que** l'information d'emplacement est transmise sous la forme d'un message vocal.

6. Procédé selon la revendication 1, **caractérisé en ce que** ledit premier abonné (A) qui souhaite connaître l'emplacement d'un dit autre abonné (B) appelle l'ordinateur de service (LS) ou une unité connectée à l'ordinateur de service (LS) et l'emplacement dudit autre abonné (B) est alors transmis audit premier abonné (A).

7. Réseau de communication (KN) comprenant un ordinateur de service (LS) pour récupérer des informations d'emplacement sur des abonnés (A, B), ledit ordinateur de service (LS) comprenant des moyens pour effectuer un premier contrôle afin de vérifier si un premier abonné (A) a configuré un service d'affichage de l'emplacement, **caractérisé en ce qu'**il comprend en plus :
- Des deuxièmes moyens de contrôle pour vérifier si un autre abonné (B) fait partie d'une liste des abonnés autorisés à se faire transmettre une information d'emplacement d'un dit premier abonné (A), ladite liste étant stockée par ledit premier abonné (A) sur ledit ordinateur de service (LS) ; et
- Des moyens de signalisation (LA) pour transmettre l'information d'emplacement à un dit autre abonné (B) au cours de l'établissement de la connexion entre lesdits premier et autre abonnés (A, 13) si les résultats dudit deuxième contrôle sont positifs.

8. Ordinateur de service (LS) comprenant des moyens de stockage (MEM) pour stocker l'information d'emplacement sur un premier abonné (A) ou des moyens de récupération pour récupérer l'information d'emplacement sur ledit premier abonné (A) depuis une source externe (EXTDB), ledit ordinateur de service (LS) comprenant des moyens pour effectuer un premier contrôle afin de vérifier si un premier abonné (A) a configuré un service d'affichage de l'emplacement, **caractérisé en ce que** les moyens suivants sont prévus :
- Des moyens de stockage (MEM) pour stocker une liste d'un ou plusieurs autres abonnés (B) qui sont autorisés à recevoir une information d'emplacement de la part dudit premier abonné (A) ;
- Des moyens d'interrogation (AF) pour récupérer l'information d'emplacement sur ledit premier abonné (A) à afficher à un dit autre abonné (B);
- Des deuxièmes moyens de contrôle pour vérifier si un autre abonné (B) fait partie d'une liste des abonnés autorisés à se faire transmettre une information d'emplacement dudit premier abonné (A) ; et
- Des moyens de signalisation (LA) pour transmettre l'information d'emplacement audit autre abonné (B) au cours de l'établissement de la connexion entre lesdits premier et autre abonnés (A, B) si les résultats dudit deuxième contrôle sont positifs.

9. Ordinateur de service (LS) selon la revendication 8, **caractérisé en ce que** des moyens de contrôle sont en plus prévus pour contrôler l'autorisation d'un abonné (A, B) à recevoir l'information d'emplacement.

10. Ordinateur de service (LS) selon la revendication 8, **caractérisé en ce que** des moyens de gestion (MF) supplémentaires sont prévus pour maintenir les données d'emplacement à jour et mettre àjour les autorisations d'abonné.

11. Module de programme (AF) comprenant des moyens de code conçus pour exécuter les étapes suivantes d'un procédé pour transmettre une information d'emplacement d'un premier abonné (A) à un autre abonné (B), ledit module de programme étant conçu pour être exécuté dans un ordinateur de service (LS) :
- Réception du numéro de téléphone dudit premier abonné (A) dont il faut transmettre l'information d'emplacement ;
- Réception du numéro de téléphone d'un dit autre abonné (B) auquel il faut transmettre l'information d'emplacement et
- Premier contrôle au niveau d'un ordinateur de service (LS) pour vérifier si ledit premier abonné (A) a configuré un service d'affichage de l'emplacement ;
- Deuxième contrôle au niveau dudit ordinateur de service (LS) pour vérifier si ledit autre abonné (B) fait partie d'une liste des abonnés autorisés stockée par ledit premier abonné (A) sur ledit ordinateur de service (LS) ;
- Transmission d'une information d'emplacement dudit premier abonné (A) audit autre abonné (B) au cours de l'établissement de la connexion entre le premier et l'autre abonnés (A, B) si les résultats dudit deuxième contrôle sont positifs.

12. Module de programme (MF) selon la revendication 11, lequel est exécuté dans un ordinateur de service (LS) pour configurer et gérer un service de transmission d'une information d'emplacement, comprenant en plus les étapes suivantes :
- Réception des numéros de téléphone des autres abonnés (B) qui sont autorisés à recevoir l'information d'emplacement sur le premier abonné (A) ;
- Stockage dans une mémoire (MEM) des numéros de téléphone des autres abonnés autorisés à recevoir l'information d'emplacement et
- Stockage de l'information d'emplacement ou de la source auprès de laquelle récupérer l'information d'emplacement (EXTDB) sur le premier abonné (A) qui est à transmettre.

13. Module programme (MF) selon la revendication 12, **caractérisé en ce que** des moyens de réception (INTEXT) sont prévus pour la réception automatique de l'information d'emplacement actuelle d'un dispositif externe (EXTDB).
